Europäisches Patentamt

European Patent Office

Office européen des brevets

(11) Publication number: **0 037 651**
**B1**

(12) **EUROPEAN PATENT SPECIFICATION**

(45) Date of publication of patent specification: **27.12.85**

(21) Application number: **81301107.9**

(22) Date of filing: **17.03.81**

(51) Int. Cl.⁴: **B 21 D 51/46**

(54) **Molding device for molding a liner on the inside surface of the top panel of a container closure shell.**

(30) Priority: **21.03.80 JP 34685/80**

(43) Date of publication of application:
**14.10.81 Bulletin 81/41**

(45) Publication of the grant of the patent:
**27.12.85 Bulletin 85/52**

(84) Designated Contracting States:
**DE FR GB IT NL SE**

(56) References cited:
**EP-A-0 012 314**
**FR-A-2 048 062**
**GB-A-1 552 713**
**US-A-2 391 341**
**US-A-2 823 422**
**US-A-3 187 920**
**US-A-3 343 211**
**US-A-3 366 723**
**US-A-3 547 746**
**US-A-3 827 843**

(73) Proprietor: **JAPAN CROWN CORK CO. LTD.**
**Saiwa Building 3-1 Uchisaiwai-cho 1-chome**
**Chiyoda-ku Tokyo (JP)**

(72) Inventor: **Kubo, Tateo**
**Corpo Yamakawa 5-9 Yuhigaoka**
**Hiratsuka-shi Kanagawa-ken (JP)**

(74) Representative: **Hewlett, Arthur James et al**
**STEVENS, HEWLETT & PERKINS 5 Quality Court**
**Chancery Lane**
**London WC2A 1HZ (GB)**

## Description

This invention relates to a molding device for molding liner material supplied to the inner surface of the top panel of a container closure shell to a predetermined shape.

Container closures of the type comprising a closure shell having a top panel, a skirt extending downwardly from the peripheral edge of the top panel, and a molded liner of a plastic material such as a polyolefin or vinyl chloride resin have gained widespread acceptance as container closures for sealing containers such as bottles and cans. Such closures may take various forms, including crown caps, pilferage-proof caps, screw caps and other easily openable container closures. Generally the liner in such a type of container closures is formed conveniently by supplying a quantity of heat-softened liner material to the inside of the top panel of a closure shell and molding it into a desired shape (see, for example, U.S. Patents No. 2,823,422 and 3,187,920, British Patent No. 1,552,713 and European Patent Publication No. 0012314.

A known device for molding liner material into a desired shape in a closure shell, comprises a support for the inverted closure shell, a molding tool disposed above the support, and means for raising and lowering the molding tool and the support relative to each other. The problem with this known molding device is that as shown, for example, in the European Patent Publication No. 0012314 or in European Patent Application No. 80301920.7, when at least a greater portion of a liner material deposited in the closure shell is annular and is positioned near the periphery of the top panel, the liner material cannot be accurately molded into a liner of the desired shape.

The molding tool used in the known molding device as disclosed in US—A—3827843 generally includes a main body, a centre punch secured to the lower end portion of the main body, an annular bushing positioned externally of the centre punch and an annular position setting sleeve positioned externally of the annular bushing. The annular bushing and the annular position setting sleeve are mounted for raising and lowering relative to the main body of the molding tool over a predetermined distance. The annular bushing is elastically urged downwardly by a relatively weak spring means disposed between it and the main body, while the annular position setting sleeve is elastically urged downwardly by a relatively strong spring means interposed between it and the main body of the molding tool. In a normal state (that is, a state before the liner material is molded by insertion of the lower end of the molding tool into the closure shell), the lower end of the annular bushing elastically urged downwardly by the relatively weak spring means projects beyond the lower end of the centre punch and the lower end of the annular position setting sleeve. Accordingly, when the molding tool enters the closure shell to mold the liner material therein, the annular bushing leads the centre punch and the lower end of the annular position setting sleeve into the shell. If at least a major portion of the liner material in the closure shell exists annularly near the periphery of the top panel, it is the annular bushing which first contacts the liner material to be molded, thus tending to cause the liner material to flow radially inwardly and outwardly. If the radial flow, especially the radially outward flow, of the liner material occurs before the lower end of the centre punch and the lower end of the annular position setting sleeve of the molding tool have fully entered the closure shell, the liner material flows to positions at which the presence of the liner material is intrinsically undesirable, and this will result in a liner of an undesired shape.

Regarding the state of the art as disclosed in US—A—3827843 it is a primary object of this invention to provide a molding device which enables the liner material to be molded accurately into a liner of the desired shape from an annular deposit of liner material near the periphery of the top panel of the closure shell.

It has been found, quite contrary to the prior art, that the primary object of the invention can be achieved by using an annular bushing which is urged upwardly in relation to the main body of the molding tool by resilient means and is selectively driven downwardly against the resistance of the resilient means.

According to the present invention there is provided a molding device for forming a liner on the inside surface of the top panel of a container closure shell, comprising a support for an inverted closure shell and a molding tool movable vertically relative to one another, said molding tool being disposed above the support and including a main body, a centre punch fixed to the main body and a movable annular bushing positioned around the centre punch and mounted for vertical movement relative to the main body through a predetermined distance, characterised in that the molding device further includes means for raising the annular bushing upwardly relative to the main body of the molding tool and in that the annular bushing is lowered against the resistance of the raising means.

The raising means for the annular bushing is preferably a spring or equivalent resiliently-acting device.

In the accompanying drawings:

Figure 1 is a partial sectional view showing the principal parts of one embodiment of the molding device constructed in accordance with this invention; and

Figures 2 to 6 are partial sectional views showing the principal parts of the molding device of Figure 1 in various positions so as to illustrate the sequence of operations and advantages of the molding device of Figure 1.

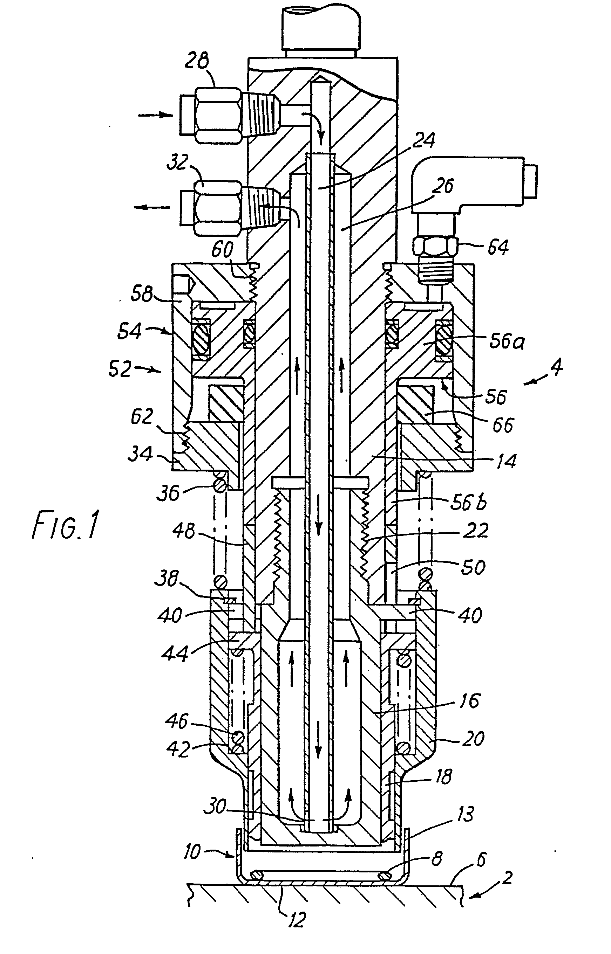

In Figure 1 the molding device of the invention comprises a support 2 and a molding tool generally shown at 4 and disposed above the support 2.

The support 2 has a substantially flat top surface 6. In operation an inverted closure shell 10, having a deposit of liner material 8 on its top panel 12 is conveyed to the top surface 6 of the support 2 by a conveyor mechanism (not shown). The container closure shell 10 may be of any conventional shape. For example, it may be fabricated from an aluminium-base alloy sheet, tinplate or a chromate-treated steel sheet to provide a circular top panel 12 and a cylindrical skirt 13. The shape of the deposit of liner material 8 which has been supplied to the top panel 12 may be of any desired shape. When the diameter of the container clousre shell 10 is relatively large, it is preferred that the liner material 8 be deposited as an annulus near the periphery of panel 12 by such a method as is described in European Patent Publication No. 0012314, or the liner material 8 be prefabricated by such a method as is described in European Patent Application No. 80301920.7 so that a greater part thereof is positioned annularly on the peripheral edge portion of the inside of the top panel 12.

The molding tool, shown generally at 4, has a main body 14, a centre punch 16, an annular bushing 18, and in the illustrated embodiment, an annular position setting sleeve 20 as well for limiting outward flow of the liner material. The centre punch 16 is threaded to the main body 14 at 22. Within the main body 14 and the centre punch 16 are formed flow and return passages 24, 26 for cooling fluid (or heating fluid) such as water. Preferably, these passages are constructed so that, as shown by arrows in Figure 1, a cooling fluid (or heating fluid) is introduced into passage 24 through an inlet portion 28, caused to flow into the discharge passage 26 through holes 30 provided at the lower end of the introduction passage 24, and finally discharged from an outlet portion 32.

The annular bushing 18 is arranged around the centre punch in such a way that it can travel through a predetermined distance. The sleeve 20 is disposed externally of the annular bushing 18 so that it can travel through a predetermined range in relation to the main body. A resilient means 36, consisting of a compression coil spring, is interposed between the upper end of the sleeve 20 and the lower surface of an annular member 34 (the annular member 34 will be described in greater detail later) fixed to the main body 14, so that the annular position setting sleeve 20 is urged downwardly relative to the main body 14 by the action of the spring means 36. The downward movement of the sleeve 20 is limited by contact of a stop ring 38 secured in sleeve 20, with arms 40 projecting at intervals circumferentially from the centre punch 16. A resilient means 46, consisting of a compression coil spring, is interposed between a shoulder 42 formed on the lower inside surface of the sleeve 20 and a flange portion 44 at the upper end of the annular bushing 18, so that the annular bushing 18 is resiliently urged upwardly relative to the sleeve 20, and therefore also relative to the main body 14. The upward movement of the annular bushing 18 is limited (as shown in Figure 1) by the abutting of the upper end of the annular bushing 18 against the lower end of a tubular member 48. The tubular member 48 will be described further hereinbelow. The member 48 has formed therein a plurality of slots 50 (only one of which is shown in Figure 1) through which the arms 40 of the centre punch 16 project.

In addition to the support 2 and the molding tool 4 described above, the molding device of the invention further includes a mechanism (not shown) of any suitable form known per se for raising and lowering the main body 14 of the molding tool 4 and the support relative to each other.

For example the molding tool 4 and support 2 may travel around a common axis and the vertical movement of one or both may result from following a stationary cam track.

It is also important that the molding device constructed in accordance with this invention should include a mechanism for selectively lowering the annular bushing 18 as required against the resistance of the resilient spring means 46.

The annular bushing-lowering mechanism may be of a suitable form which can perform the aforesaid operation. In the illustrated embodiment, the annular bushing-lowering mechanism shown generally at 52 consists of a hydraulic cylinder 54 attached to the main body 14 of the molding tool and a piston 56. The annular cylinder 54 of the hydraulic cylinder mechanism consists of the main body 14 of the molding deivce 4, an inverted cup-like member 58, threaded to the main body 14 at 60 and an annular member 34 threaded to the lower end of the member 58 at 62. On the other hand, the piston 56 has a head portion 56a slidably received within the cylinder 54 and a rod portion 56b projecting downwardly between the main body 14 and the inner circumferential surface of the annular member 34. The lower end of the rod portion 56b abuts against the upper end of the member 48 mentioned above. An inlet port 64 is provided for introducing an actuating fluid such as compressed air or a pressurised oil into the cylinder 54. Preferably, an annular buffer 66, formed of a suitable elastic material, is provided on the upper surface of the annular member 34 to limit downward travel of the piston.

It will be appreciated that when pressurised fluid is introduced into the cylinder 54 through the inlet port 64, the piston 56 drives the annular bushing 18 against the resistance of the spring means 46.

The operation and advantage of the molding device are now described with reference to Figures 1—6.

Before entry of the molding tool 4 into the container closure shell 10, the mechanism 52 is in a rest position (as shown in Figure 1) and the annular bushing 18 is held at its most elevated position with respect to the main body 14 by the action of the spring member 46. The sleeve 20, on the other hand, is held at its lowest position with respect to the main body 14 by the action of the spring means 36. It is important that in this position the lower end of the annular bushing 18 should be above the lower end of the centre punch 16 and the lower end of the annular position setting sleeve 20 at a sufficient distance. Conveniently, the lower end of the sleeve 20 is slightly below the lower end of the centre punch 16.

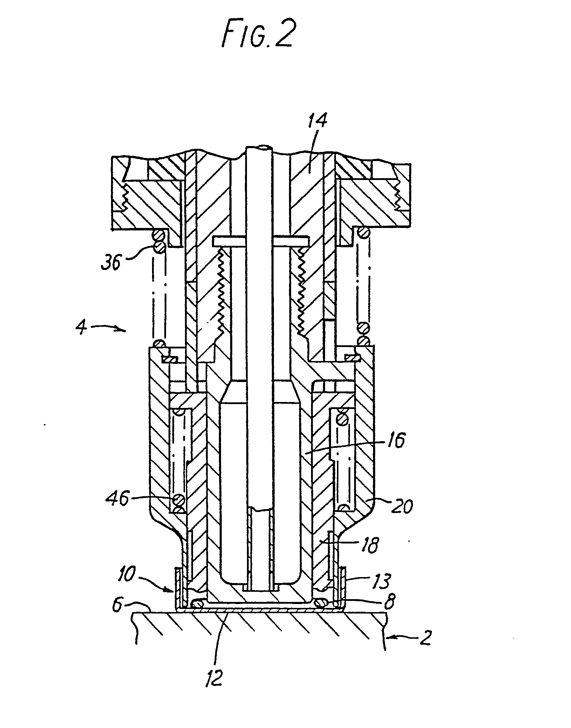

As the main body 14 of the molding tool 4 descends in relation to support 2, the lower end of the sleeve 20 comes into contact with the top panel 12 at a position at which the lower end of the sleeve 20 is close to, or in contact with, the periphery of the annular liner material 8 positioned as shown in Figure 2. In addition to confining the liner material 8 to prevent radial outward flow, the sleeve 20 also performs the function of centering the shell 10 with respect to the molding tool 4.

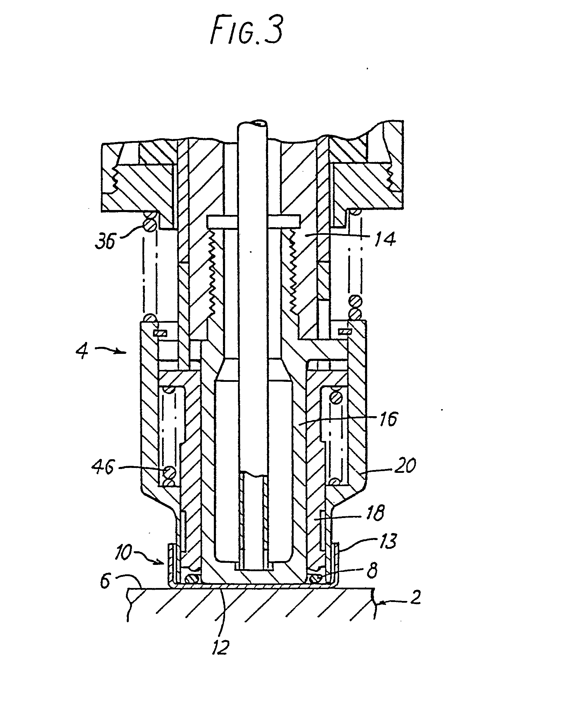

As the descent of the main body 14 of the molding tool 4 in relation to support 2 is continued, the centre punch 16 is brought into abutment with the top panel 12 of the shell 10 (or with the liner material 8 when it is present in a central portion of the panel 12), at a position at which the lower end of the centre punch 16 is close to, or in contact with, the inner circumference of the annular liner material 8. At this point, the motion of the main body 14 of the molding tool 4 towards support 2 is halted. In the position shown in Figure 3 the sleeve 20 cannot descend relative to the closure shell 10 because its lower end is already in abutment with the top panel 12 and has risen relative to the main body 14 of the molding tool 4 against the resistance of the spring as the result of the motion of the main body 14 towards the shell 10.

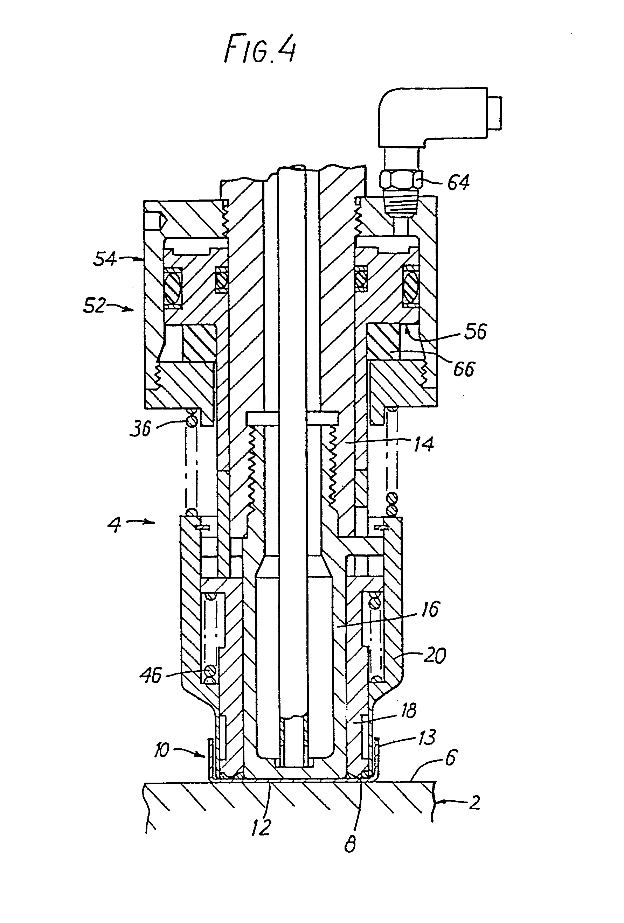

When the lower end of the sleeve 20 and the lower end of the centre punch 16 abut the top panel 12 (as in Figure 3), the mechanism 52 is actuated by the admission of a pressurized fluid into the cylinder 54 in timed relationship with the movement of the body 14 in a manner well understood per se. Specifically, when a pressurised fluid is introduced into the cylinder 54 through the inlet port 64, the piston 56 is caused to descend to the position shown in Figure 4, to press the lower end of the bushing 18 against the annular liner material 8. Accordingly, in a region between the lower end of the centre punch 16 and the lower end of the sleeve 20, the liner material 8 is molded into a desired shape defined by the shape of the lower end of the annular bushing 18.

As stated hereinabove, when the lower end of the molding tool 4 enters the shell 10, the annular bushing 18 is held at its most elevated position with respect to the main body 14 by spring 46, and the lower end of the annular bushing is positioned sufficiently above the lower end of the centre punch 16 and the lower end of the sleeve 20. The lower end of the sleeve 20 and the lower end of the centre punch 16 abut the inside surface of the top panel 12 of the shell 10 outwardly and inwardly of the liner material 8 respectively thereby restraining radially outward and inward flow of the liner material 8 positioned between them. It is only after this restraint has been imposed that the annular bushing 18 descends and is pressed against the liner material 8. Accordingly, the liner material 8 is accurately molded into the desired shape without flowing radially outwardly and inwardly.

In contrast, in the already known molding device, when the lower end of the molding tool enters the closure shell, the annular bushing is held at its lowest position relative to the main body of the molding tool, and the lower end of the annular bushing projects downwardly beyond the lower end of the centre punch and the lower end of the annular position setting sleeve. For this reason, before the lower end of the sleeve and the lower end of the centre punch abut the inside surface of the top panel of the container closure shell, the lower end of the annular bushing tends to be pressed against the liner material to cause it to flow radially outwardly and inwardly away from the desired position for the molded liner.

In the illustrated embodiment of the molding device of this invention, the molding tool 4 includes sleeve 20 in addition to the centre punch 16 and the annular bushing 18. The sleeve 20 may be omitted when the construction of the device insures that the shell 10 is accurately centred on the support 2 in relation to the tool 4 and the peripheral surface of the annular bushing 18 fits the inner circumferential surface of the skirt 13 very closely to prevent the liner material 8 from flowing radially outwardly and upwardly along the surface of the skirt 13. When it is desired to form a liner which extends to, and makes contact with, the inner circumferential surface of the skirt 13, the lower end portion of the annular position setting sleeve 20 can be made shorter than that shown in the drawings so that even in the positions shown in Figures 3 and 4, the lower end of the annular position setting sleeve 20 of the molding tool 4 does not contact the inside surface of the top panel 12 of the shell 10 but is located slightly above it.

After the liner material 8 has been molded as required by the procedure described hereinabove with reference to Figures 1 to 4, the main body 14 of the molding tool 4 is raised in relation to support 2, thereby moving the lower end of the molding tool 4 away from the shell 10. Desirably, this operation is carried out by the following procedure.

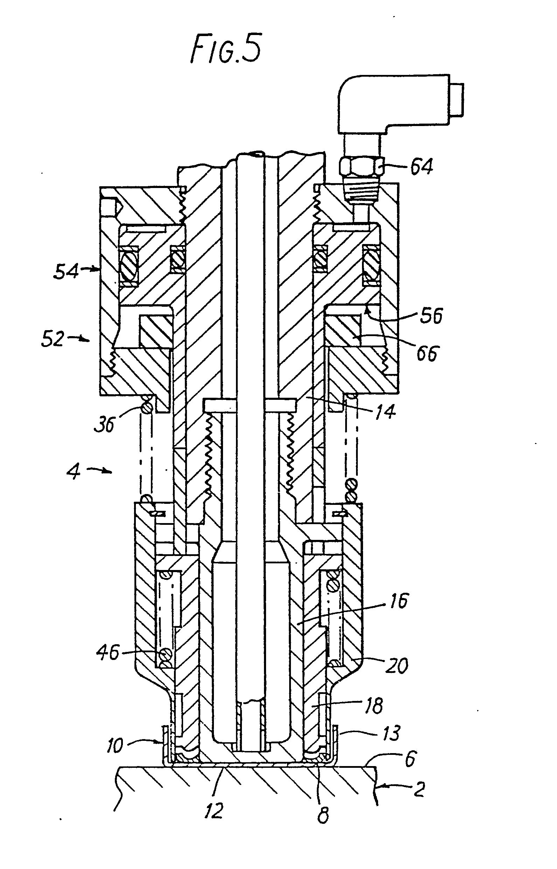

Prior to raising main body 14 of the molding tool 4, the port 64 is switched to exhaust to release fluid pressure acting on piston 56. As a result, (as shown in Figure 5), the action of the spring 46 causes the piston 56 to rise and the annular bushing 18 is returned to its raised position with respect to the main body 14. Hence, the pressure of the annular bushing 18 on the liner material 8 is released. Then, the main body 14 of the molding tool 4 is raised sufficiently in relation to support 2 to lift the lower end of the molding tool 4 completely out of the shell 10.

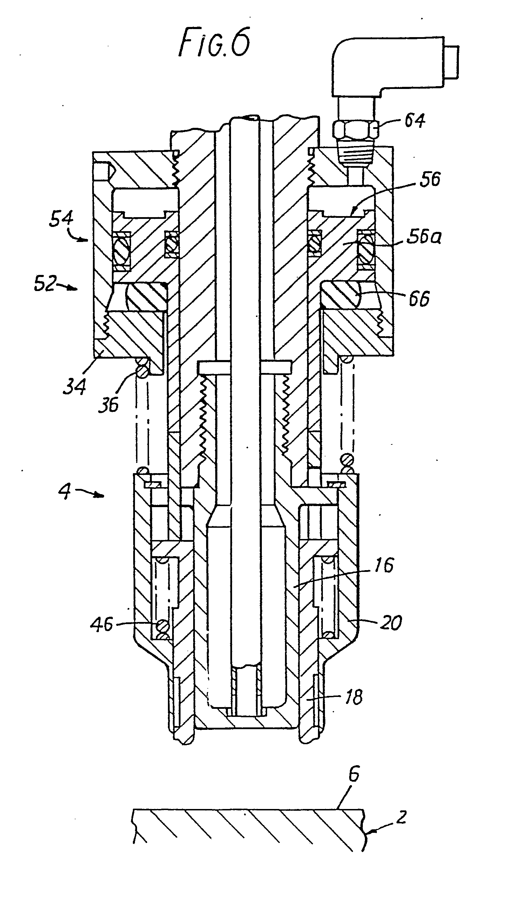

Then, the closure shell 10 is carried away from the top surface 6 of the support 2. Then, pressurised fluid is admitted into the cylinder 54 through the port 64 to actuate the mechanism 52 for lowering the annular bushing 18. As a result, as shown in Figure 6, the piston 56, and therefore the annular bushing 18, are fully lowered to cause the lower end of the annular bushing 18 to project slightly downwardly beyond the lower end of the sleeve 20 and the lower end of the centre punch 16. After this, the port 64 is switched to exhaust. As a result, the piston 56 and the annular bushing 18 are raised by the resilience of the spring 46 and the buffer 66, compressed between the head portion 56a of the piston 56 and the annular member 34, and are returned to the position shown in Figure 1. Thus, the molding device is ready for the next cycle of molding operation.

Thus, as shown in Figure 6, before the next cycle of molding operation is started after releasing of the lower end of the molding tool 4 from the shell 10, the annular bushing 18 is fully lowered to cause its lower end to project downwardly beyond the lower end of the sleeve 20 and the lower end of the centre punch 16, and is then returned to its raised position.

This operation brings about the following advantage. Experience shows that when the annular bushing 18 is driven downwardly to press against the liner material 8 and mold it into the desired shape as shown in Figure 4 and then the bushing 18 is raised as shown in Figure 5, a very small portion of the liner material tends to adhere to the inner and outer edges of the lower end of the annular bushing 18. It will be readily appreciated that if the next molding cycle is carried out while permitting a part of the liner material from the previous molding cycle to remain on the edges of the annular bushing 18, it exerts adverse effects on the next molding cycle. Thus, when after completely releasing the molding tool 4 from the inside of the shell 10, the annular bushing 18 is again lowered and raised in the above-mentioned manner, the inner edge of the sleeve 20 and the outer edge of the centre punch 16 act like a knife edge against the edges of the lower end of the annular bushing 18 while the annular bushing 18 rises. Consequently, the liner material residues adhering to the edges of the annular bushing 18 are removed.

While the present invention has been described in detail hereinabove with reference to one embodiment of the molding device of the invention shown in the attached drawings, it should be understood that the invention is in no way limited to such a specific embodiment, and various changes and modifications are possible without departing from the spirit and scope of the invention.

For example, in the illustrated embodiment, the spring 46 is interposed between the sleeve 20 and the annular bushing 18 to urge the annular bushing 18 upwardly relative to the main body 14. In place of the spring 46, it is possible to seal the space between the sleeve 20 and the annular bushing 18 (the space in which the spring means 46 is disposed in the illustrated embodiment) with a suitable seal ring and supply an actuating pressurised fluid such as compressed air to this space as required so that the bushing 18 may be urged upwardly relative to the main body 14 by the action of the actuating pressurised fluid at appropriate times in the machine cycle. Alternatively, the cylinder mechanism composed of the cylinder 54 and the piston 56 which is single-acting may be changed to a double-acting type so that the double-acting cylinder mechanism may serve both as the mechanism for lowering the annular bushing 18 as required and as the means for raising the annular bushing 18 upwardly relative to the main body 14. In this construction, however, it is necessary to drivingly connect the output end of the piston mechanically to the annular bushing 18 so that raising the piston of the cylinder mechanism lifts the annular bushing 18.

## Claims

1. A molding device for forming a liner on the inside surface of the top panel of a container closure shell, comprising a support (2) for an inverted closure shell (10) and a molding tool (4) movable vertically relative to one another, said molding tool (4) being disposed above the support (2) and including a main body (14), a centre punch (16) fixed to the main body (14) and a movable annular bushing (18) positioned around the centre punch (16) and mounted for vertical movement relative to the main body (14) through a predetermined distance, characterised in that the molding device further includes means (46) for raising the annular bushing (18) upwardly relative to the main body (14) of the molding tool and in that the annular bushing (18) is lowered against the resistance of the raising means (46).

2. The molding device of claim 1 further characterised in that an annular position setting sleeve (20) is arranged around the annular bushing (18), said annular position setting sleeve (20) being mounted for raising and lowering relative to the main body (14) of the molding tool over a predetermined distance and being resiliently urged downwardly relative to the main body by spring means (36) interposed between it and the main body (14).

3. The molding device of claim 2 wherein the means for raising the annular bushing (18) upwardly relative to the main body (14) of the molding tool is a spring means (46) interposed between the annular bushing (18) and the centre punch (16) or the annular position setting sleeve (20).

4. The molding device of claim 2 or 3 wherein, when the lower end of the molding tool (16) enters the container closure shell (10), the annular bushing (18) is held in the raised position with respect to the main body (14) and the lower end of the annular bushing (18) is positioned above the lower ends of the centre punch (16) and of the annular position setting sleeve (20) at a sufficient distance; when the centre punch (16) and the annular position setting sleeve (20) have been brought into abutment with the top panel of the closure shell, the annular bushing (18) is caused to descend by the action of the driving mechanism (48) to press its lower end against liner material (12) present on the surface of the top panel (12) of the shell between the centre punch (16) and the annular position setting sleeve (20); and after the lower end of the molding tool (16) has been lifted out of the inside of the shell the annular bushing (18) is lowered sufficiently by the action of the driving mechanism (48) to cause its lower end to project downwardly beyond the lower end of the centre punch (16) and the lower end of the annular position setting sleeve (20) and then returned to its raised position relative to the centre punch (16) and sleeve (20) to clear residual liner material from its inner and outer edges.

5. The molding device of any one of claims 1 to 4 wherein the mechanism for driving the annular bushing downwardly is composed of a hydraulic cylinder mechanism (52) consisting of a cylinder (54) attached to the main body (14) of the molding tool and a piston (56) disposed slidably in the cylinder (54), said cylinder mechanism (52) being constructed such that when the piston (56) is caused to slide in a predetermined direction, the piston (56) acts on the annular bushing (18) to cause it to move in a corresponding direction.

6. A molding device according to any of claims 2 to 5 for molding an annulus of flowable liner material in a container closure shell in which the centre punch (14, 16) and an annular position setting sleeve (20) are provided with interengaging formations (38, 40) to limit downward movement of said sleeve (20) in relation to said centre punch (16) spring means (36) being interposed between said sleeve and centre punch for urging said sleeve (20) downwardly, said annular bushing (18) being urged upwardly towards a raised position in relation to said centre punch (14, 16) by spring means (46) interposed between said annular bushing (18) and said sleeve (20), an annular space for liner material (8) deposited in the closure shell (10) being defined between said centre punch (16) and said sleeve when said annular bushing (18) is in its raised position.

**Revendications**

1. Un dispositif de moulage pour former un revêtement sur la surface intérieure du panneau supérieur d'une capsule de fermeture de récipient, comprenant un support (2) pour une capsule de fermeture retournée (10) et un outil de moulage (4) déplaçables verticalement l'un par rapport à l'autre, ledit outil de moulage (4) étant disposé au-dessus du support (2) et comprenant un corps principal (14), un poinçon central (16) fixé sur le corps principal (14) et un fourreau annulaire mobile (18) positionné autour du poinçon central (16) et monté de manière à se déplacer verticalement par rapport au corps principal (14) sur une distance prédéterminée, caractérisé en ce que le dispositif de moulage comprend en outre un moyen (46) pour faire monter le fourreau annulaire (18) par rapport au corps principal (14) de l'outil de moulage et en ce que le fourreau annulaire (18) est descendu en opposition à la résistance du moyen de montée (46).

2. Le dispositif de moulage de la revendication 1, caractérisé en outre en ce qu'un manchon annulaire de positionnement (20) est disposé autour du fourreau annulaire (18), ledit manchon annulaire de positionnement (20) étant monté de façon à se déplacer vers le haut et vers le bas par rapport au corps principal (14) de l'outil de moulage sur une distance prédéterminée et étant poussé élastiquement vers le bas par rapport au corps principal par un organe élastique (36) interposé lui et le corps principal (14).

3. Le dispositif de moulage de la revendication 2, dans lequel le moyen pour faire monter le fourreau annulaire (18) par rapport au corps principal (14) de l'outil de moulage est un organe élastique (46) interposé entre le fourreau annulaire (18) et le poinçon central (16) ou le manchon annulaire de positionnement (20).

4. Le dispositif de moulage de la revendication 2 ou 3, dans lequel, lorsque l'extrémité inférieure de l'outil de moulage (16) pénètre dans la capsule de fermeture de récipient (10), le fourreau annulaire (18) est maintenu dans la position relevée par rapport au corps principal (14) et l'extrémité inférieure du fourreau annulaire (18) est positionnée au-dessus des extrémités inférieures du poinçon central (16) et du manchon annulaire de positionnement (20) à une distance suffisante; lorsque le poinçon central (16) et le manchon annulaire de positionnement (20) ont été amenés en butée contre le panneau supérieur de la capsule de fermeture, le fourreau annulaire (18) est obligé de descendre sous l'action du mécanisme d'entraînement (48) de façon à appliquer son extrémité inférieure contre la matière de revêtement (12) se trouvant sur la surface du panneau supérieur (12) de la capsule entre le poinçon central (16) et le manchon annulaire de positionnement (20); et après que l'extrémité inférieure de l'outil de moulage (16) a été soulevée hors de l'intérieur de la capsule, le fourreau annulaire (18) est descendu suffisamment sous l'action du mécanisme d'entraînement (48) pour faire en sorte que son extrémité inférieure dépasse vers le bas de l'extrémité inférieure du poinçon central (16) et de l'extrémité inférieure du manchon annulaire de positionnement (20) et soit ensuite ramenée dans sa position relevée par rapport au poinçon central (16) et au manchon (20) de manière à séparer de la matière résiduelle de revêtement de ses bords intérieur et extérieur.

5. Le dispositif de moulage selon une quelconque des revendications 1 à 4, dans lequel le mécanisme d'entraînement du fourreau annulaire vers le bas est composé d'un mécanisme à cylindre hydraulique (52) se composant d'un cylindre (54) fixé sur le corps principal (14) de l'outil de moulage et d'un piston (56) disposé de façon coulissante dans le cylindre (54), ledit mécanisme à cylindre (52) étant construit de telle sorte que, lorsque le piston (56) est actionné pour coulisser dans une direction prédéterminée, ce piston (56) agisse sur le fourreau annulaire (18) pour le faire déplacer dans une direction correspondante.

6. Un dispositif de moulage selon une quelconque des revendications 2 à 5, pour mouler un anneau de matière de revêtement fluable dans une capsule de fermeture de récipient, dans lequel le poinçon central (14, 16) et un manchon annulaire de positionnement (20) sont pourvus de parties (38, 40) rentrant en contact l'une avec l'autre pour limiter le mouvement de descente dudit manchon (20) par rapport audit poinçon central (16), un ressort (36) étant interposé entre ledit manchon et ledit poinçon central pour pousser ledit manchon (20) vers le bas, ledit fourreau annulaire (18) étant poussé vers le haut en direction d'une position relevée par rapport audit poinçon central (14, 16) par un ressort (46) interposé entre ledit fourreau annulaire (18) et ledit manchon (20), un espace annulaire pour de la matière de revêtement (8) déposée dans la capsule de fermeture (10) étant défini entre ledit poinçon central (16) et ledit manchon quand ledit fourreau annulaire (18) se trouve dans sa position relevée.

**Patentansprüche**

1. Vorrichtung zum Formen einer Einlage auf der Innenfläche der oberen Wand einer Behälterverschlußkappe, bestehend aus einer Stütze (2) für eine umgekehrte Verschlußkappe (10) und einem Formwerkzeug (4), die relativ zueinander senkrecht bewegbar sind, wobei das Formwerkzeug (4) über der Stütze (2) angeordnet ist und einen Hauptkörper (14), einen an dem Hauptkörper (14) befestigten Mittelstempel (16) und eine bewegliche Ringhülse (18) aufweist, die den Mittelstempel (16) umgibt und relativ zum Hauptkörper (14) über ein vorgegebenes Stück senkrecht bewegbar angeordnet ist, dadurch gekennzeichnet, daß die Formvorrichtung außerdem ein Mittel (46) aufweist, das die Ringhülse (18) relativ zum Hauptkörper (14) des Formwerkzeuges nach oben anhebt und daß die Ringhülse (18) gegen den Widerstand des Hubmittels (46) abgesenkt wird.

2. Formvorrichtung nach Anspruch 1, dadurch gekennzeichnet, daß die Ringhülse (18) von einer ringförmigen Positionseinstellbüchse (20) umgeben ist, die relativ zu dem Hauptkörper (14) des Formwerkzeuges ein vorgegebenes Stück hebbar und senkbar angeordnet ist und die von einem zwischen ihr und dem Hauptkörper (14) vorgesehenen Federmittel (36) relativ zu dem Hauptkörper elastisch vorgespannt ist.

3. Formvorrichtung nach Anspruch 2, bei der das Mittel zum Anheben der Ringhülse (18) relativ zu dem Hauptkörper (14) des Formwerkzeuges ein Federmittel (46) ist, das das zwischen der Ringhülse (18) und dem Mittelstempel (16) oder der ringförmigen Positionseinstellbüchse (20) eingefügt ist.

4. Formvorrichtung nach Anspruch 2 oder 3, bei der die Ringhülse (18) in bezug auf den Hauptkörper (14) in angehobener Position gehalten ist und das untere Ende der Ringhülse (18) sich in ausreichendem Abstand über dem unteren Ende des Mittelstempels (16) und der ringförmigen Positionseinstellbüchse (20) befindet, wenn das untere Ende des Formwerkzeuges (16) in die Behälterverschlußkappe (10) eindringt; bei der die Ringhülse (18) von dem Antriebsmechanismus (48) abgesenkt wird, um ihr unteres Ende zwischen dem Mittelstempel (16) und der ringförmigen Positionseinstellbüchse (20) gegen das auf der Oberfläche der oberen Wand (12) der Kappe befindliche Einlagenmaterial (8) zu pressen, wenn der Mittelstempel (16) und die ringförmige Positionseinstellbüchse (20) gegen die obere Wand der Verschlußkappe angesetzt worden sind und bei der nach Herausheben des unteren Endes des Formwerkzeuges (16) aus dem Kappeninneren die Ringhülse (18) von dem Antriebsmechanismus (48) so weit abgesenkt ist, daß ihr unteres Ende nach unten über das untere Ende des Mittelstempels (16) und das untere Ende der ringförmigen Positionseinstellbüchse (20) vorragt und dann in ihre relativ zu dem Mittelstempel (16) und der Büchse (20) angehobene Position zurückgeführt wird, um restliches Einlagenmaterial von ihren inneren und äußeren Rändern abzustreifen.

5. Formvorrichtung nach einem der Ansprüche 1 bis 4, bei der der Mechanismus zur Abwärtsbewegung der ringhülse aus einem Hydraulikzylinder-Mechanismus (52) gebildet ist, der aus einem an dem Hauptkörper (14) des Formwerkzeuges befestigten Zylinder (54) und einem in dem Zylinder (54) verschiebbar angeordneten Kolben (56) besteht, wobei der Zylinder-Mechanismus (52) so ausgebildet ist, daß der Kolben (56) bei seiner Verschiebung in eine vorbestimmte Richtung die Ringhülse (18) in eine entsprechende Richtung bewegt.

6. Formvorrichtung nach einem der Ansprüche 2 bis 5 zum Formen eines Ringes aus fließfähigem Einlagenmaterial in einer Behälterverschlußkappe, bei der der Mittelstempel (14, 16) und eine ringförmige Positionseinstellbüchse (20) mit zusammengreifenden Formationen (38, 40) versehen sind, die die Abwärtsbewegung der Büchse (20) in bezug auf den Mittelstempel (16) begrenzen, bei der zwischen der Büchse und dem Mittelstempel Federmittel (36) eingefügt sind, die die Büchse (20) nach unten vorspannen, bei der die Ringhülse (18) von einem zwischen ihr und der Büchse (20) eingefügten Federmittel (46) nach oben gegen eine in bezug auf den Mittelstempel (14, 16) angehobene Position vorgespannt wird und bei der zwischen dem Mittelstempel (16) und der Büchse ein Ringraum für das in der Verschlußkappe (10) befindliche Einlagematerial (8) vorhanden ist, wenn die Ringhülse (18) ihre angehobene Position eingenommen hat.

FIG.1

# FIG.2

FIG.3

FIG.4

FIG.5

## FIG.6